# EUROPÄISCHE PATENTSCHRIFT

(11) **EP 3 698 383 B1**
(45) Veröffentlichungstag und Bekanntmachung des Hinweises auf die Patenterteilung: **24.11.2021**
(21) Anmeldenummer: 18779570.3
(22) Anmeldetag: 13.09.2018
(51) Int. Cl.: H01F 7/16

(54) **ELEKTROMAGNETISCHE AKTUATORVORRICHTUNG UND VERWENDUNG EINER SOLCHEN**
ELECTROMAGNETIC ACTUATOR DEVICE AND USE OF SUCH A DEVICE
DISPOSITIF ACTIONNEUR ÉLECTROMAGNÉTIQUE ET SON UTILISATION

(30) Priorität: 19.10.2017 DE 102017124485
(43) Veröffentlichungstag der Anmeldung: 26.08.2020
(73) Patentinhaber: ETO MAGNETIC GmbH, 78333 Stockach (DE)
(72) Erfinder: FEINDLER, Michael, 78333 Stockach (DE); NIEWEGLOWSKI, Marcin, 54-610 Wroclaw (PL)
(74) Vertreter: Patent- und Rechtsanwälte Behrmann Wagner PartG mbB
(86) Internationale Anmeldenummer: PCT/EP2018/074696
(87) Internationale Veröffentlichungsnummer: WO 2019/076549

(56) Entgegenhaltungen:
- DE-A1-102011 052 526
- DE-A1-102013 114 830
- DE-A1-102014 113 500

## Beschreibung

Die vorliegende Erfindung betrifft eine elektromagnetische Aktuatorvorrichtung nach dem Oberbegriff des Hauptanspruchs. Ferner betrifft die vorliegende Erfindung eine Verwendung einer solchen elektromagnetischen Aktuatorvorrichtung als Ventilvorrichtung.

Elektromagnetische Aktuatoren, bei welchen eine als Reaktion auf eine Bestromung stationärer Spulenmittel relativ zu stationären Kernmitteln bewegbare Ankereinheit eine Ventilschiebereinheit antreibt und, entsprechend einer jeweiligen Stellposition, eine Ventilfunktionalität bewirkt, sind aus dem Stand der Technik allgemein bekannt. Nicht zuletzt aufgrund ihrer einfachen konstruktiven Realisierung, ihrer großserientauglichen Fertigbarkeit und ihrer mechanischen Zuverlässigkeit sind daher gattungsgemäße, oberbegriffliche Aktuatorvorrichtungen, insbesondere in einer Ausgestaltung als oder für Ventilvorrichtungen, für eine große Vielzahl von Anwendungen gängig. Dabei sind Verwendungen im Zusammenhang mit der Fluidschaltung oder einer Nockenwellenbetätigung in einem Fahrzeug- bzw. automotiven Kontext bevorzugt, jedoch ist der Einsatz nicht auf dieses technische Gebiet beschränkt.

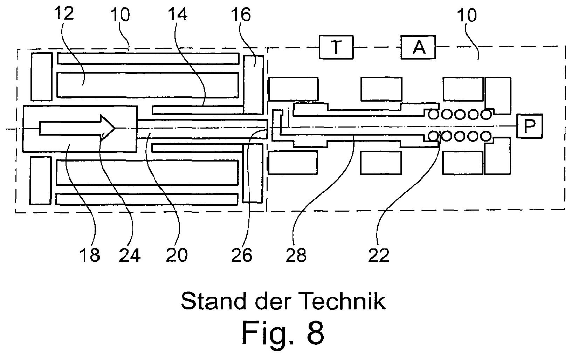

Die Fig. 8 zur Erläuterung des Erfindungshintergrundes basiert auf der (zum Anmeldungszeitpunkt der vorliegenden Anmeldung unveröffentlichten) DE 10 2016 109 865 und zeigt in einem in der Figur linksseitigen Gehäuse 10 eine elektromagnetische Aktuatorvorrichtung mit den oberbegrifflichen Merkmalen des Hauptanspruchs: Gegenüber stationären Spulenmitteln 12 und von diesen teilweise umschlossenen stationären Kernmitteln 14, 16 ist eine Ankereinheit (Ankermittel) 18 entlang einer axialen Richtung (insoweit entsprechend der Horizontalen in der Figurenebene der Fig. 8) als Reaktion auf eine Bestromung der Spulenanordnung 12 bewegbar. Die Ankereinheit 18 wirkt kraftschlüssig zusammen mit einer langgestreckten Stößeleinheit (Stößelmitteln) 20, dergestalt, dass bei der Bestromung und aus der in Fig. 8 gezeigten stromlosen Anschlagsposition entfernt von den Kernmitteln 40 (vorgespannt durch rückstellende Federmittel 22), eine Ankerbewegung entlang der Pfeilrichtung 24 in der Figurenebene nach rechts erfolgt, mit der Wirkung, dass der dadurch bewegte Stößel 20 mit einem Endabschnitt 26 (Eingriffsabschnitt) einen Ventilschieber 28 bewegt, welcher wiederum dann, in der vorgesehenen Weise, Ventil-Fluidanschlüsse P-, A sowie T freilegt bzw. verschließt, wobei im konkret gezeigten Beispiel dies in der Art eines Proportionalventils erfolgt. In der gezeigten Illustration des Standes der Technik gemäß Fig. 8 ist das Gehäuse 10 zweigeteilt aufgebaut (und potentiell auch trennbar), und zwar in einen linksseitigen, den eigentlichen Aktuatorbaugruppen zugeordneten Gehäuseteil und einen rechtseitigen, den Ventilbaugruppen zugeordneten Gehäuseteil.

Eine derartige Vorrichtung eignet sich für eine Vielzahl von Stell- und Betätigungsaufgaben, etwa auch als Nockenwellenstellventil an einem Verbrennungsmotor, wie er insbesondere in einem Automobilkontext eingesetzt wird. Dabei ist der Ankerraum, d.h. der axial zwischen dem Anker 18 und dem hülsenartigen, von den Spulenmitteln 12 umschlossenen Kern 14 begrenzte und entsprechend dem Bewegungszustand der Ankermittel größenveränderliche Raum, ebenso mit einem Schmiermittel, typischerweise Öl, gefüllt, wie ein Arbeits- bzw. Eingriffsbereich axial benachbart dem Endabschnitt 26 der Stößelmittel 20. Bei der Ausgestaltung bzw. Dimensionierung sowie beim Betrieb einer derartigen Vorrichtung sind damit dann neben elektromagnetischen Effekten insbesondere auch fluiddynamische Effekte, beeinflusst durch dieses Schmiermittel, zu beachten, wobei insbesondere das Erfordernis nach einem wirksamen (Fluid-)Druckausgleich besteht, um insoweit keine Dynamiknachteile im Schaltbetrieb zu haben, bei welchem dann durchaus auch Schaltzeiten, nämlich Bewegungszeiten zum Bewegen des Ankers entlang eines Maximalhubs, kritisch sein können.

Zusätzlich von Relevanz, auch für ein derartiges Zeitverhalten der gezeigten Aktuatorvorrichtung, ist eine Relativpositionierung und Ausrichtung der Ankermittel 18 einerseits und der Kernmittel 14 andererseits, und zwar nicht nur im in der Fig. 8 gezeigten (unbestromten) Ausgangszustand, sondern auch in einem Anschlagzustand des Ankerkörpers 18 am Kern 14. Um insoweit etwa ein störungsfreies Lösen des Ankers vom Kern bei einem Zurückführen (nach Ende der Spulenbestromung) zu gewährleisten, ist es im Stand der Technik allgemein üblich, einen Mindestabstand zwischen Anker und Kern in Form sogenannter Antiklebscheiben zu realisieren; hierbei handelt es sich typischerweise um scheibenförmige Körper aus einem (magnetisch nichtleitenden) Metallmaterial, etwa Edelstahl, welcher dann, z.B. durch Verstemmen, Schweißen oder Kleben auf eine der einander gegenüberstehenden Stirnflächen des Ankers bzw. des Kerns aufgebracht ist (oder lose gehalten ist) und damit, im ausgefahrenen bzw. Anschlagzustand des Ankers, einen Mindestabstand zwischen Anker und Kern definiert.

Vor dem Hintergrund dieser Erfordernisse für einen störungsfreien und zuverlässigen Stellbetrieb der gattungsgemäßen elektromagnetischen Aktuatorvorrichtung ist daher ein nicht unerheblicher konstruktiver Aufwand erforderlich, insbesondere wenn, wie als gattungsgemäß bekannt vorauszusetzen, die mit den Ankermitteln zusammenwirkende Stößeleinheit endseitig eine beschriebene Antiklebscheibe an- bzw. eingesetzt erhält. In Verbindung mit den einen Druckausgleich bewirkenden Maßnahmen entsteht so eine komplexe Funktionseinheit mit entsprechend anspruchsvollem Herstellungsaufwand samt Qualitätskontrolle.

Die DE 10 2013 114830 A1 betrifft eine elektromagnetische Stellvorrichtung mit einer durch Bestromung stationärer Spulenmittel entlang einer axialen Bewegungsrichtung um einen Ankerhub antreibbaren Ankereinheit, der Ankereinheit zugeordneten, endseitig zum Zusammenwirken mit einem externen Stellpartner ausgebildeten und um einen Stößelhub aus einer Ausgangsstellung in eine Eingriffsstellung entlang der Bewegungsrichtung bewegbaren Stößelmitteln und die Stößelmittel in der Bewegungsrichtung vorspannenden Federmitteln, wobei die relativ zur Ankereinheit bewegbar geführten Stößelmittel mantelseitig einen Rampen- und/oder Konusabschnitt zwischen einem ankerseitigen Stößelabschnitt größeren Durchmessers und einem Stößelabschnitt mit kleinerem Durchmesser aufweisen, wobei ein unter Vorspannung in einem die Stößelmittel führenden Gehäuseabschnitt enthaltender Druckkörper mantelseitig mit dem Rampen- bzw. Konusabschnitt zusammenwirkt.

Die DE 10 2011 052526 A1 offenbart eine elektromagnetische Ventilvorrichtung aufweisend Puffer- und/oder Dämpfungsmittel, die zum Dämpfen eines Anschlags oder Aufpralls der Ankereinheit an die Kerneinheit ausgebildet sind, wobei als Elastomer-Element ausgebildete Dichtmittel sich entlang der Bewegungsrichtung durch eine Ankereinheit erstreckende, nicht-elastomere Distanzmittel zum Zusammenwirken mit einer Kerneinheit oder mit der Ventilöffnung so zugeordnet sind, dass das Dämpfen des Anschlags bzw. Aufpralls durch Übertragung einer Anschlags- bzw. Aufprallenergie mittels der Distanzmittel auf das Elastomer-Element erfolgt.

Die DE 10 2014 113 500 A1 offenbart eine elektromagnetische Aktorvorrichtung mit einer Permanentmagnetmittel sowie eine entlang einer Bewegungsrichtung langgestreckte Stößeleinheit aufweisenden Ankereinheit, die durch stationäre elektromagnetische Antriebsmittel in mindestens eine von zwei stromlos stabilen End- und/oder Anschlagspositionen bewegbar ist, wobei einem die Ankereinheit zumindest abschnittsweise umschließenden Gehäuse stationäre Magnetfelddetektormittel zum berührungslosen Zusammenwirken mit den Permanentmagnetmitteln in zumindest einer zur Ankerpositionsdetektion vorgesehenen der End- bzw. Anschlagspositionen zugeordnet sind. Aufgabe der vorliegenden Erfindung ist es daher, eine elektromagnetische Aktuatorvorrichtung im Hinblick auf vereinfachte Fertigbarkeit und damit erhöhte (und potentiell automatisierbare) Großserientauglichkeit zu verbessern, dabei die Aktuatorvorrichtung sowohl im Hinblick auf ihre magnetischen, als auch ihre dynamischen Eigenschaften zu verbessern und damit eine Vorrichtung zu schaffen, welche in Verbindung mit Ventilbaugruppen die Realisierung eines zuverlässigen Elektromagnetventils ermöglicht, prinzipiell jedoch auch für darüber hinausgehende Stell- bzw. Aktuatoranwendungen geeignet ist.

Die Aufgabe wird durch die elektromagnetische Aktuatorvorrichtung mit den Merkmalen des Hauptanspruchs gelöst. Vorteilhafte Weiterbildungen der Erfindung sind in den Unteransprüchen beschrieben. Schutz im Rahmen der Erfindung wird zudem beansprucht für eine Verwendung einer derartigen erfindungsgemäßen elektromagnetischen Aktuatorvorrichtung als Proportional-Ventilvorrichtung und/oder als Nockenwellen-Stellventil, insbesondere für einen Verbrennungsmotor.

In erfindungsgemäß vorteilhafter Weise ist die Funktionalität der (magnetischen) Antiklebscheibe zum Bestimmen des Anschlag-Mindestabstands zwischen den Anker- und den Kernmitteln als Abschnitt der Stößelmittel ausgestaltet, genauer gesagt als im Durchmesser verbreiteter und scheibenförmiger Endabschnitt der Stößelmittel, welcher einstückig an einem langgestreckten Stangenabschnitt der Stößelmittel ansitzt. Auf diese Weise kann durch ein geeignetes Herstellungs- bzw. Fertigungsverfahren diese Stößeleinheit mittels eines (einzelnen bzw. gemeinsamen) Fertigungsschritts hergestellt werden und senkt damit den Herstellungsaufwand insbesondere unter dem Gesichtspunkt einer Großserientauglichkeit.

Insbesondere wenn dann die Stößelmittel - bevorzugt mittels Spritzgießen od.dgl. automatisierbarer Fertigung - aus einem Polymermaterial hergestellt sind (wobei sich die Erfindung den Umstand zunutze macht, dass im technologischen Kontext der durch den Kerndurchbruch geführten Stößelmittel, welche getrennt bzw. trennbar von den Ankermitteln vorgesehen sind, die Stößelmittel nicht an einem kraftwirksamen magnetischen Flusskreis beteiligt sind und somit aus spritzfähigem Kunststoffmaterial hergestellt werden können) ist die kostengünstige Fertigbarkeit optimiert. Die dann weiterbildend vorteilhaft beigefügten Glasfasern (oder vergleichbare Beimischungen) verbessern dann die Festigkeits- bzw. Steifigkeitseigenschaften der so hergestellten Stößeleinheit (Stößelmittel) für einen jeweiligen Einsatzzweck.

Das erfindungsgemäß vorteilhafte einstückige Realisieren der Stößelmittel, zusätzlich weiterbildend verbessert durch das Spritzgießen, gestattet dann noch auf einfache Weise, den Stangenabschnitt der Stößelmittel mit einer durchgehenden Vertiefung so zu versehen, dass ein Druckausgleich beidseits der Kernmittel erfolgen kann - bevorzugt ist diese Vertiefung als (geeignet durchgehende) Längsnut realisiert, welche in ansonsten bekannter Weise durch das bereits für das Spritzgießen zu verwendende Werkzeug unmittelbar und ohne weiteren zusätzlichen Bearbeitungsschritt gebildet werden kann.

Entsprechendes gilt für die (zusätzlich weiterbildend oder alternativ vorzusehende) Profilierung der auf die Kernmittel gerichteten End- bzw. Stirnfläche des scheibenförmigen Endbereichs der Stößelmittel: Gerade bei (ausschließlich) planer Ausgestaltung der aufeinanderstehenden und beim Ankeranschlag sich berührenden Stirnflächen besteht die Gefahr unerwünschter (hydrostatischer) Klebeeffekte durch das im Ankerraum befindliche (Schmier-)Medium, etwa ein dort vorhandenes Öl. Die erfindungsgemäße Weiterbildung in Form der Profilierung verhindert wirksam das unerwünschte Anhaften bzw. Ankleben der Stößelmittel an der zugewandten Kern-Endfläche aufgrund der beschriebenen Effekte, wobei es zusätzlich weiterbildend im Rahmen der Erfindung vorteilhaft ist, diese Profilierung als (mindestens eine) Nut auszubilden, welche sich weiter bevorzugt quer über die Endbereichs-Stirnfläche (und damit senkrecht zur axialen Richtung) erstreckt.

Wiederum vorteilhaft im Rahmen der Erfindung, insbesondere bei weiterbildungsgemäß bevorzugter Realisierung der einstückig hergestellten Stößelmittel durch Spritzgießen eines polymeren Materials, ist auch diese Weiterbildung im Rahmen des ohnehin bereits für das Spritzgießen eingesetzten Spritzwerkzeugs realisierbar, mithin entfällt das Erfordernis eines zusätzlichen Bearbeitungsschritts zum Realisieren der vorteilhaften Profilierung.

Dies gilt dann wiederum auch für den zusätzlich weiterbildungsgemäß vorgesehenen Stößeldurchbruch (wiederum in beliebiger Kombination mit den vorstehend diskutierten Weiterbildungen vorsehbar), welcher, insbesondere bei vorhandener Axialbohrung der Ankermittel, diesen Ankerdurchbruch zum Ankerraum (zwischen Anker- und Kernmitteln) öffnen kann, mit anderen Worten, der Fluid- bzw. Druckausgleich dann auch noch entlang der Ankermittel und durch diese hindurch ermöglicht ist.

Um das Aufsitzen auf bzw. (kraftschlüssige) Zusammenwirken zwischen Stößelmitteln und Ankermitteln insbesondere auch dann günstig zu gestalten, wenn der diskutierte Ankerdurchbruch axial in den Ankermitteln ausgebildet ist, sieht die Erfindung im Rahmen einer zusätzlichen vorteilhaften Weiterbildung vor, in der Art eines (vollständig oder partiell) umlaufenden Ringabsatzes den scheibenförmigen Endbereich so auszugestalten, dass das Aufsitzen und Mitnehmen im Zusammenwirken zwischen Anker- und Stößelmitteln optimiert ist. Zusätzlich vorteilhaft bietet ein solcher Ringabsatz im synergistischen Zusammenwirken mit dem weiterbildungsgemäßen (oben diskutierten) Stößeldurchbruch den Vorteil, dass dieser Stößeldurchbruch auch außerhalb einer Überdeckung mit dem Ankerdurchbruch (Ankerbohrung) in die Stößelmittel bzw. deren scheibenförmigen Endabschnitt eingebracht sein kann. Wie auch der Stößeldurchbruch kann der Ringabsatz einstückig angeformt sein, mithin wiederum auch dasselbe bereits für das vorteilhaft weiterbildende Spritzgießen verwendete Werkzeug unmittelbar zur Realisierung dieser vorteilhaften Weiterbildung Verwendung finden.

Zusätzlich vorteilhaft und erfindungsgemäß weiterbildend ist vorgesehen, den Stangenabschnitt (in axialer Richtung abschnittsweise) mit einstückig angeformten und mantelseitig radial vorspringenden Führungsflächen zu versehen, welche, in der Art von bevorzugt umlaufenden Ringflächen (und ggf. unterbrochen von der weiterbildungsgemäßen Längsnut) als Gleitflächen zum Zusammenwirken mit einer entsprechenden (und vorteilhaft hohlzylindrisch ausgebildeten) Innen- bzw. Führungsfläche des Kerndurchbruchs dienen. Durch geeignete Ausgestaltung dieser Flächen im Hinblick auf Größe, Anordnung und Verteilung ist es damit auf einfache Weise ermöglicht, das Bewegungs- bzw. Gleitverhalten der Stößelmittel innerhalb der Kernmittel zu beeinflussen, wobei wiederum auch diese vorteilhafte Weiterbildung im Rahmen des einstückigen Spritzverfahrens, wie dargelegt, realisiert werden kann und keinen zusätzlichen Bearbeitungsschritt erfordert, wenn das für das vorteilhafte Kunststoffspritzen verwendete Werkzeug verwendet wird.

Während die vorliegende Erfindung prinzipiell beliebige Stellaufgaben realisieren kann, ist es gleichwohl bevorzugt, die erfindungsgemäße Aktuatorvorrichtung als Stelleinheit für ein (Proportional-)Ventil zu nutzen, wobei in diesem Fall die erfindungsgemäßen Stößelmittel mit ihrem Endabschnitt mit einem Ventilschieber als Stellpartner zusammenwirken. In erfindungsgemäß weiterbildender und bevorzugter Art ist es dann vorgesehen, insoweit analog zur Fig. 8, diesem Stellpartner eine Rückstellfeder als Kraftspeicher so zuzuordnen, dass die Ankerbewegung bei Bestromung gegen die rückstellende Kraft dieser Rückstellfeder wirkt, welche nämlich über die Wirkungskette Ventilschieber - Stößelmittel - Ankermittel dann auch die Ankermittel zurückstellt. Diese Konstruktion ermöglicht damit auch in günstiger Weise die Realisierung eines Proportionalventils, welches als bevorzugte, jedoch nicht ausschließliche Verwendung der vorliegenden Erfindung gleichermaßen beansprucht ist.

Im Ergebnis erreicht die vorliegende Erfindung in überraschend einfacher und eleganter Weise die Verbesserung bekannter und als gattungsbildend vorausgesetzter elektromagnetischer Ventilvorrichtungen, insbesondere für Ventilzwecke im Hinblick auf verbesserte Betriebseigenschaften, gleichermaßen verbunden mit vereinfachter und damit potentiell großserientauglicher Herstellbarkeit. Damit ist der vorteilhafte Ventil- und/oder Stellkontext, weiter bevorzugt für den automobilen Anwendungsbereich, zwar bevorzugt, beschränkt jedoch nicht den technischen Nutzungsbereich zur Realisierung der Vorteile der vorliegenden Erfindung.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine teilweise geschnittene seitliche Längsansicht der elektromagnetischen Aktuatorvorrichtung gemäß einem ersten Ausführungsbeispiel der Erfindung;
- Fig. 2: bis
- Fig. 7:: verschiedene Ansichten der im Rahmen der Aktuatorvorrichtung der Fig. 1 eingesetzten Stößelmittel und
- Fig. 8:: eine längsschnittlich-schematische Schemaansicht zum Verdeutlichen einer als gattungsbildend herangezogenen elektromagnetischen Aktuatorvorrichtung zum Erfindungshintergrund.

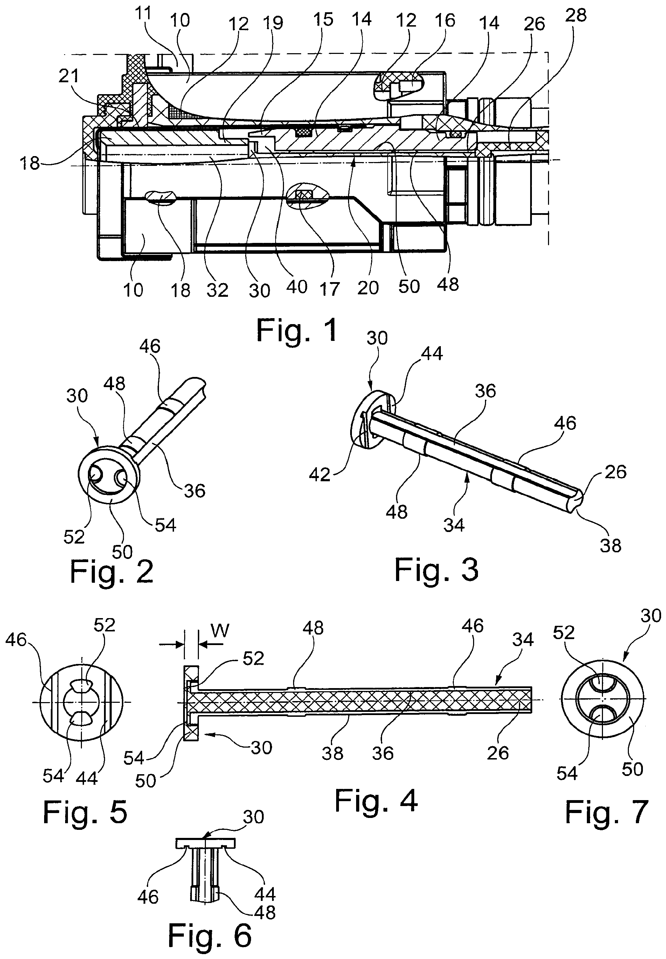

Bei der teilweise geschnittenen Ansicht der Fig. 1 sind funktional äquivalente Baugruppen mit denen der Fig. 8 mit denselben Bezugszeichen versehen; so wirkt wiederum eine auf einem Spulenträger vorhandene Wicklung 12 als (stationäres) Spulenmittel, umschließend einen hohlzylindrischen bzw. hülsenartigen stationären Kern 14, welcher, entlang der axialen Richtung (horizontal in der Figurenebene der Fig. 1) mit einem Ankerkörper 18 zusammenwirkt, wobei ein ankerseitiger Konusabschnitt 15 des Kerns (in ansonster bekannter Weise und zum Ausbilden eines magnetischen Kraft-Luftspalts) mit einem Ankervorsprung 19 zusammenwirkt. Die Anordnung aus Kernbaugruppe 14 und Ankerbaugruppe 18 ist von einem (aus einem typischen nichtmagnetischen Stahlmaterial realisierten) Ankerführungsrohr 21 umschlossen, welches wiederum unmittelbar im Spulenträger der Spulenmittel 12 sitzt. Diese sitzen dann in einer i.w. zylindrischen Gehäuseschale 10, an welcher ein Steckerabschnitt 11 zur externen Bestromung der Spule 12 herausgeführt ist. Das Bezugszeichen 17 symbolisiert eine die Kerneinheit (Kernmittel) 14 im Ankerführungsrohr 21 haltende (und dichtende) Dichtung 17.

Axial dem Anker 18 gegenüberliegend greift ein Endabschnitt 26 von Stößelmitteln 20 mit einer endseitigen Stirnfläche auf eine zugeordnete eingriffsseitige Stirnfläche einer Ventilschiebereinheit 28 (als Stellpartner), wobei die Stößelmittel, anderenends, mit einem verbreiterten Endabschnitt 30 auf dem kernseitigen Endabschnitt 19 der Ankermittel 18 aufsitzen. Diese besitzen eine sich axial durch die Ankermittel hindurch erstreckende Ankerbohrung 32 als Ankerdurchbruch, wobei der scheibenförmige Endabschnitt 30, in der in der Fig. 1 gezeigten Kontaktposition mit den Ankermitteln, eine Öffnung dieser Bohrung 32 übergreift.

Mittels Spritzgießen aus einem glasfaserverstärkten (GF) Polyamidmaterial - hier PPS mit 40 Gew% GF - ist die Stößelbaugruppe 20 (Stößelmittel) des gezeigten Ausführungsbeispiels hergestellt. Genauer gesagt besteht die einstückig realisierte Stößelbaugruppe 20 aus dem scheibenartigen (und zum lösbaren Aufsitzen auf der Kernbaugruppe 18 ausgebildeten) Endabschnitt 30, welcher in einen Stangenabschnitt 34 übergeht. Dieser weist, sich axial entlang zu einer Mantelfläche erstreckend, ein Paar von einander gegenüberstehenden Längsnuten 36, 38 auf, welche einen zwischen den Kernmitteln 14 und den Ankermitteln 18 begrenzten (und entsprechend der Ankerposition veränderlichen) Ankerraum 40 druckausgleichend mit einem rechtsseitig des Endabschnitts 26 (in Richtung auf den Ventilschieber 28) gelegenen Eingriffsbereich verbinden.

Deutlich wird, wie die effektive (axiale) Breite w (Fig. 4) der Scheibe 30, in der Art einer Antiklebscheibe, einen Mindestabstand zwischen Anker 18 und Kern 14 definiert, sodass auch bei einem Beenden der Bestromung der Spule 12 ein zuverlässiges Abfallen und Zurückführen der Ankereinheit in die Ausgangsposition der Fig. 1 gewährleistet ist (auch hier ermöglicht durch eine an den Ventilschieber 28 als Stellpartner angreifende, nicht gezeigte Rückstellfeder, analog der Druckfeder 22 in Fig. 8).

Zusätzlich vorteilhaft und ergänzend weist der scheibenförmige Endabschnitt 30 der Stößelmittel 20 in Form eines Paares von parallel zueinander verlaufenden (und sich senkrecht zur axialen Richtung erstreckenden) Längsnuten 22, 44 Mittel zum Verhindern eines (hydrostatischen, nämlich durch einen Ölfilm oder dergleichen bedingten) Klebens der Einheit 20 am Kern 14 auf; insbesondere die gezeigten Nuten 42, 44 verringern in vorteilhafter Weise eine derartige unerwünschte Haftwirkung und erleichtern entsprechend das Lösen der Stößelmittel beim Zurückstellen vom Kern.

Zusätzlich vorteilhaft und wiederum einstückig an- bzw. eingeformt weist der Stangenabschnitt 34 der Stößelmittel 20 ein Paar von umlaufenden flächenartigen Ring-Vorsprüngen 46, 48 auf, welche - als radiale Vorsprünge - Gleitflächen zum Führen der Stößelmittel 20 in der hohlzylindrischen Innenbohrung 50 der Kernmittel (Kerndurchbruch) ermöglichen.

Schließlich ist die auf die Ankermittel 18 gerichtete Endfläche des scheibenförmigen Endabschnitts 30, wie insbesondere in Fig. 2 und Fig. 7 erkennbar, mit einem umlaufenden Ringabsatz 50 versehen, sodass der Endabschnitt 30 unter Ausbildung eines Absatzes auf dem vom Endabschnitt 19 gebildeten stirnseitigen Außenrand der Ankermittel 18 aufsitzt und, über ein Paar von im Endabschnitt 30 gebildeten Durchbrüchen 52, 54, die Ankerbohrung 32 zum Ankerraum 50 öffnet bzw. freilegt - entsprechend ist auch hier dann ein Druckausgleich ermöglicht, welcher sich dann bis zum (in der Fig. 1 linksseitigen) Ende der Ankermittel 18 im Ankerführungsrohr 21 erstreckt.

Bei geeigneter Ausgestaltung eines Spritzwerkzeugs für die Herstellung der Stößelmittel 20 lassen sich sämtliche beschriebenen Ausbildungen, Nuten, Vorsprünge und Durchbrüche der vorbeschriebenen Art mit einem einzigen Herstellungsschritt - nämlich dem Spritzgießen - herstellen, insbesondere ohne dass es zusätzlichen Arbeitsgängen zur Ausbildung einzelner Funktionsabschnitte bedarf. Entsprechend ist die Stößelbaugruppe 20, auch im Rahmen von konfigurierbaren Baukastensysteme oder dergleichen, günstig geeignet, preisgünstige Herstellbarkeit und Großserientauglichkeit mit vielfältigen Einsatzmöglichkeiten zu kombinieren.

## Patentansprüche

1. Elektromagnetische Akutatorvorrichtung mit
als Reaktion auf eine Bestromung von stationären Spulenmitteln (12) in einem Aktuatorgehäuse (10) relativ zu stationären Kernmitteln (14) entlang einer axialen Richtung bewegbaren Ankermitteln (18),
auf welche axial langgestreckte, in einem Kerndurchbruch (50) der Kernmittel geführte Stößelmittel (20) so greifen, dass eine Bewegung der Ankermittel in Richtung auf die Kernmittel die Stößelmittel mitnehmen kann,
wobei ein den Ankermitteln axial entgegengesetzter Endabschnitt (26) der Stößelmittel zum Zusammenwirken mit einem oder zum Realisieren eines Stellpartner/s, insbesondere Ventilschieber/s (28), ausgebildet ist,
wobei die Stößelmittel einen langgestreckten Stangenabschnitt (34) sowie einen in Richtung auf die Ankermittel (18) endseitig und einstückig am Stangenabschnitt ansitzenden, im Durchmesser verbreiterten und scheibenförmigen Endabschnitt (30) aufweisen,
dessen axiale Erstreckung (W) in einem Anschlagzustand der Ankermittel an einer den Ankermitteln zugewandten End- und/oder Stirnfläche der Kernmittel einen Mindestabstand zwischen den Anker- und den Kernmitteln, insbesondere in der Art einer magnetischen Antiklebscheibe, bestimmt.

2. Vorrichtung nach Anspruch 1, **dadurch gekennzeichnet, dass** die Stößelmittel (20) als aus einem bevorzugt eine Glasfaserbeimischung aufweisenden Polymermaterial durch ein Spritzgießverfahren hergestellt sind.

3. Vorrichtung nach Anspruch 1 oder 2, **dadurch gekennzeichnet, dass** der Stangenabschnitt mantelseitig eine insbesondere als Längsnut (36, 38) ausgebildete, axial bevorzugt durchgehende Vertiefung so aufweist, dass ein Mediendruckausgleich zwischen einem von den Anker- und den Kernmitteln gebildeten Ankerraum (50) und einem axial den Kernmitteln gegenüberliegenden Betätigungsbereich realisiert werden kann.

4. Vorrichtung nach einem der Ansprüche 1 bis 3, **dadurch gekennzeichnet, dass** der scheibenförmige Endbereich an einer zum Zusammenwirken mit der End- bzw. Stirnfläche der Kernmittel vorgesehenen Flachseite eine Profilierung (42, 44) aufweist.

5. Vorrichtung nach Anspruch 4, **dadurch gekennzeichnet, dass** die Profilierung als mindestens eine und sich bevorzugt senkrecht zur axialen Richtung erstreckende Nut (42, 44) in der Flachseite ausgebildet ist.

6. Vorrichtung nach einem der Ansprüche 1 bis 5, **dadurch gekennzeichnet, dass** die Ankermittel einen axial verlaufenden Ankerdurchbruch (32), insbesondere eine axiale Mittelbohrung, aufweisen und die Stößelmittel im Bereich des scheibenförmigen Endabschnitts zum zumindest abschnittsweisen Übergreifen einer stößelseitigen Öffnung des Ankerdurchbruchs ausgebildet sind, insbesondere einen Ringabsatz (50) aufweisen.

7. Vorrichtung nach Anspruch 6, **dadurch gekennzeichnet, dass** die Stößelmittel einen Stößeldurchbruch (52, 54), insbesondere Bohrung, durch den scheibenförmigen Endabschnitt (30) so aufweisen, dass bei auf die Ankermittel greifenden Stößelmitteln der Stößeldurchbruch den Ankerdurchbruch (32) zu einem zwischen den Anker- und den Kernmitteln aufgespannten Ankerraum (50) mediendruckausgleichend öffnet.

8. Vorrichtung nach einem der Ansprüche 1 bis 7, **dadurch gekennzeichnet, dass** der Stangenabschnitt (34) axial abschnittsweise eine einstückig angeformte, axial abschnittsweise und mantelseitig radial vorspringende und bevorzugt umlaufende Führungsfläche (46, 48) zum gleitenden Zusammenwirken mit einer Führungsinnenfläche des Kerndurchbruchs (50) aufweist.

9. Vorrichtung nach einem der Ansprüche 1 bis 8, **dadurch gekennzeichnet, dass** den Anker- und/oder den Stößelmitteln Kraftspeichermittel, insbesondere in Form von Federmitteln, so kraftschlüssig zugeordnet sind, dass diese die Ankermittel in eine von den Kernmitteln entfernte axiale Anschlagposition im Ventilgehäuse vorspannen.

10. Verwendung der elektromagnetischen Aktuatorvorrichtung nach den vorangehenden Ansprüchen als Proportional-Ventilvorrichtung und/oder als Nockenwellen-Stellventil für einen Verbrennungsmotor.

## Claims

1. An electromagnetic actuator device comprising
armature means (18) which, as a reaction to an energization of stationary coil means (12), are movable in an actuator housing (10) along an axial direction relative to stationary core means (14),
and which are gripped by axially elongated plunger means (20) guided in a core passage (50) of the core means in such a manner that a movement of the armature means in the direction to the core means can entrain the plunger means,
an end section (26) of the plunger means, axially opposite the armature means, being configured to interact with or to realize a control partner, in particular a valve slide (28),
wherein
the plunger means comprise an elongated rod section (34) and a disk-shaped end section (30) which has a widened diameter and which sits on the rod section in one piece on the end side in the direction to the armature means (18),
wherein the axial extension (W) of the end section determines a minimum distance between the armature means and the core means, in particular in the form of a magnetic anti-adhesive disk, in an abutment state of the armature means on an end surface and/or front surface of the core means facing the armature means.

2. The device according to claim 1, **characterized in that** the plunger means (20) are made of a polymer material, preferably comprising a glass fiber addition, by an injection molding process.

3. The device according to claim 1 or 2, **characterized in that** the rod section comprises a recess on the shell side which is in particular realized as a longitudinal groove (36, 38) and which is preferably continuous in the axial direction in such a manner that a medium pressure equalization can be realized between an armature space (50) which is formed by the armature means and the core means and an actuation area which is axially opposite to the core means.

4. The device according to any one of claims 1 to 3, **characterized in that** the disk-shaped end section comprises a profile (42, 44) on a flat side, said flat side being provided for interaction with the end surface or front surface of the core means.

5. The device according to claim 4, **characterized in that** the profile is realized as at least one groove (42, 44) which preferably extends perpendicular to the axial direction in the flat side.

6. The device according to any one of claims 1 to 5, **characterized in that** the armature means comprise an armature passage (32), in particular an axial center bore, which extends in the axial direction and the plunger means are realized for at least partially engaging over an opening on the plunger side of the armature passage in the area of the disk-shaped end section, the plunger means in particular comprising an annular step (50).

7. The device according to claim 6, **characterized in that** the plunger means comprise a plunger passage (52, 54), in particular a bore, through the disk-shaped end section (30) in such a manner that the plunger passage opens the armature passage (32) towards an armature space (50) between the armature means and the core means while equalizing the medium pressure when the plunger means engage on the armature means.

8. The device according to any one of claims 1 to 7, **characterized in that** the rod section (34) comprises, axially in sections, a preferably circumferential guide surface (46, 48) which is formed in one piece and which partially projects in the axial direction and in the radial direction on the shell side and which is configured for the sliding interaction with an inner guide surface of the core passage (50).

9. The device according to any one of claims 1 to 8, **characterized in that** energy storing means, in particular in the form of spring means, are assigned in a frictional manner to the armature means and/or to the plunger means in such a manner that said energy storing means preload the armature means in an axial abutment position away from the core means in the valve housing.

10. A use of the electromagnetic actuator device according to the preceding claims as a proportional valve device and/or as a camshaft control valve for an internal combustion engine.

## Revendications

1. Dispositif d'actionneur électromagnétique comprenant
des moyens d'induit (18) déplaçables dans un boîtier d'actionneur (10) par rapport à des moyens de noyau (14) stationnaires le long d'une direction axiale en réponse à une alimentation en courant des moyens de bobine (12) stationnaires,
des moyens de poussoir (20) axialement allongés et guidés dans un passage de noyau (50) des moyens de noyau engageant sur les moyens d'induit (18) de telle manière qu'un déplacement des moyens d'induit dans la direction des moyens de noyau peut entraîner les moyens de poussoir,
une partie d'extrémité (26) des moyens de poussoir axialement opposée aux moyens d'induit étant destinée à interagir avec ou à réaliser un partenaire de positionnement, notamment un tiroir de soupape (28),
les moyens de poussoir comprenant une partie de tige (34) allongée et une partie d'extrémité (30) en forme de disque reposant en une pièce sur la partie de tige à l'extrémité dans la direction des moyens d'induit (18), le diamètre de la partie d'extrémité (30) étant élargi,
l'extension (W) axiale de la partie d'extrémité (30) dans un état de butée des moyens d'induit contre une surface d'extrémité et/ou une surface frontale des moyens de noyau tournée vers les moyens d'induit définissant une distance minimale entre les moyens d'induit et les moyens de noyau, notamment sous la forme d'un disque antiadhésif magnétique.

2. Dispositif selon la revendication 1, **caractérisé en ce que** les moyens de poussoir (20) sont fabriqués en matériau polymère comprenant, de préférence, une addition de fibres de verre, par un procédé de moulage par injection.

3. Dispositif selon la revendication 1 ou la revendication 2, **caractérisé en ce que**, du côté d'enveloppe, la partie de tige comprend un renfoncement qui est notamment réalisé comme rainure longitudinale (36, 38) et qui est de préférence continu dans le sens axial de telle manière qu'un équilibrage de pression des milieux peut être réalisé entre un espace d'induit (50) qui est formé par les moyens d'induit et les moyens de noyau et une partie d'actionnement axialement opposée aux moyens de noyau.

4. Dispositif selon l'une quelconque des revendications 1 à 3, **caractérisé en ce que** la partie d'extrémité en forme de disque comprend un profil (42, 44) sur un côté plat qui est destiné à interagir avec la surface d'extrémité ou surface frontale des moyens de noyau.

5. Dispositif selon la revendication 4, **caractérisé en ce que** le profil est réalisé comme au moins une rainure (42, 44) qui s'étend de préférence perpendiculairement à la direction axiale dans le côté plat.

6. Dispositif selon l'une quelconque des revendications 1 à 5, **caractérisé en ce que** les moyens d'induit comprennent un passage d'induit (32) qui s'étend dans le sens axial, notamment un trou central axial, et que les moyens de poussoir sont destinés à engager, au moins partiellement, sur une ouverture du passage d'induit du côté de poussoir dans la zone de la partie d'extrémité en forme de disque, notamment que les moyens de poussoir comprennent une saillie d'anneau (50).

7. Dispositif selon la revendication 6, **caractérisé en ce que** les moyens de poussoir comprennent un passage de poussoir (52, 54), notamment un trou, à travers la partie d'extrémité (30) en forme de disque de telle manière que le passage de poussoir ouvre le passage d'induit (32) vers un espace d'induit (50) entre les moyens d'induit et les moyens de noyau de manière à équilibrer la pression des milieux quand les moyens de poussoir engagent sur les moyens d'induit.

8. Dispositif selon l'une quelconque des revendications 1 à 7, **caractérisé en ce que** la partie de tige (34) comprend, axialement par sections, une surface de guidage (46, 48), de préférence circonférentielle, formée en une pièce et faisant saillie des parties dans le sens axial et du côté d'enveloppe dans le sens radial, la surface de guidage (46, 48) étant destinée à l'interaction glissante avec une surface intérieure de guidage du passage de noyau (50).

9. Dispositif selon l'une quelconque des revendications 1 à 8, **caractérisé en ce que** des moyens d'accumulation d'énergie, notamment sous la forme de moyens de ressort, sont assignés par force aux moyens d'induit et/ou aux moyens de poussoir de telle manière que les moyens d'accumulation d'énergie mettent les moyens d'induit en précontrainte dans une position de butée axiale éloignée des moyens de noyau dans le boîtier de soupape.

10. Utilisation d'un dispositif d'actionneur électromagnétique selon les revendications précédentes comme dispositif de soupape proportionnelle et/ou soupape de régulation d'arbre à cames pour un moteur à combustion.
